# EUROPEAN PATENT SPECIFICATION

(11) **EP 3 719 407 B1**
(45) Date of publication and mention of the grant of the patent: **05.01.2022**
(21) Application number: 17933535.1
(22) Date of filing: 01.12.2017
(51) Int. Cl.: F24F 7/08, F24F 12/00, F24F 13/30

(54) **HEAT-EXCHANGE VENTILATION DEVICE**
WÄRMETAUSCH- UND BELÜFTUNGSVORRICHTUNG
DISPOSITIF DE VENTILATION À ÉCHANGE DE CHALEUR

(43) Date of publication of application: 07.10.2020
(73) Proprietor: Mitsubishi Electric Corporation, Chiyoda-ku Tokyo 100-8310 (JP)
(72) Inventor: MATSUMOTO, Kohei, Tokyo 100-8310 (JP)
(74) Representative: Witte, Weller & Partner Patentanwälte mbB
(86) International application number: PCT/JP2017/043263
(87) International publication number: WO 2019/106824

(56) References cited:
- EP-A1- 1 682 829
- WO-A1-2017/050196
- JP-A- H0 210 040
- JP-A- 2000 146 250
- JP-A- 2011 220 537
- JP-A- 2014 092 303
- US-A1- 2005 257 550
- US-A1- 2010 122 794

## Description

### Field

The present invention relates to a heat exchange ventilator that performs ventilation while carrying out heat exchange with a supply air flow and an exhaust air flow.

### Background

Heat exchange ventilators each including a plurality of heat exchangers have been known. In some cases, heat exchangers are arranged in series so that air having flown through one heat exchanger flows into another heat exchanger, and in other cases, heat exchangers are arranged in parallel so that air is divided and flows separately into one heat exchanger and another heat exchanger. Japanese Patent No. 4391099 teaches a heat exchange ventilator including two heat exchangers arranged in parallel.

Document EP 1 682 829 A1, according to its abstract, states a ventilator for ventilating an indoor space by externally discharging indoor air and internally sucking outdoor air. A heat exchange unit including a heat exchanger, an outdoor unit including an air exhaust fan for discharging indoor air, and an indoor unit including an air supply fan for sucking outdoor air are individually formed, so that an operator can easily carry and install the ventilator. Because the ventilator is divided into units, the operator easily examines and repairs inside components of each unit.

Document JP H02 10040 A, according to its abstract, states that a first maintenance cover with which a hole of a side plate is covered is removably mounted to a side plate, having a hole, with which an opening for insertion and removal formed in a side wall in a direction which a heat exchanger is inserted and removed is covered, by means of a screw. A bypass passage has an opening and is positioned in juxtaposition with an exhaust passage running from a suction port on the indoor side to a discharge port on the outdoor side, and runs around the heat exchanger. The bypass passage and a damper to open and close the opening are situated to a second maintenance cover formed in a manner to be capable of being exchanged with a side plate with which the other of the opening for insertion and removal is covered. When the structure of a building is located in an insertion and removal direction and insertion and removal of the heat exchanger are impracticable, by exchanging the side plate, the first and second maintenance covers, a direction is changed and insertion and removal of the heat exchanger are practicable.

Document WO 2017/050196 A1, according to its abstract, states that A heat exchange device comprises a housing, a heat exchange core arranged in the housing, and a fixing structure for the heat exchange core. The housing is formed by an upper side plate, a lower side plate, a front side plate, a rear side plate, a left side plate, and a right side plate. The heat exchange core is inserted and arranged in the housing in a vertical direction. The fixing structure for the heat exchange core is formed by a handle, a guiding piece, and a guiding groove. The handle and the guiding piece are integrally formed and are arranged at two sides of the heat exchange core, the guiding groove is formed by a first guiding groove and a second guiding groove, the first guiding groove is provided on the front side plate and is in integral forming with the front side plate, and the second guiding groove is provided on a middle plate opposite to the front side plate and is in integral forming with the middle plate; and the guiding piece is formed by a first guiding piece and a second guiding piece, the first guiding piece is clamped with the first guiding groove, and the second guiding piece is clamped with the second guiding groove. The advantages are that not only is maintenance operation convenient and is gas tightness good, but also miniaturization can be realized.

Document JP 2000 146250 A, according to its abstract, states that two entire heat exchangers are housed in parallel in a casing. An inlet passage and an outlet passage are alternately formed through a partition member in element bodies of the exchangers, and an inlet and an outlet of the inlet passage and an inlet and an outlet of the outlet passage are formed. An outdoor air inlet and outlet, and an indoor air inlet and outlet are formed. In the casing, an inlet air passage is formed so that the inlet and the outlet are sequentially connected through the inlet passage of the exchanger, and an outlet air passage is formed so that the inlet and the outlet are sequentially connected through the outlet passage of the exchanger.

### Summary

### Technical Problem

In a heat exchange ventilator, the pressure loss can be reduced by increasing the height of heat exchangers in the stacking direction of layers through which air flows pass. In a case where a plurality of heat exchangers are arranged in parallel as described in Japanese Patent No. 4391099 mentioned above, however, the height of the heat exchangers may be limited so that the heat exchangers can be accommodated within a size required of a heat exchange ventilator. Thus, in related art, there is a problem in that it is difficult to reduce the pressure loss while accommodating heat exchangers within a size required of a heat exchange ventilator.

The present invention has been made in view of the above, and an object thereof is to provide a heat exchange ventilator capable of reducing the pressure loss while accommodating heat exchangers within a size required of a heat exchange ventilator.

### Solution to Problem

According to the invention, there is provided a heat exchange ventilator comprising: an exhaust fan to generate an exhaust air flow flowing from an inside to an outside of a room; a supply fan to generate a supply air flow flowing from the outside to the inside of the room; and a first heat exchanger and a second heat exchanger to carry out heat exchange between the exhaust air flow and the supply air flow, the first heat exchanger and the second heat exchanger each including primary passages through which the exhaust air flow passes and secondary passages through which the supply air flow passes, wherein the first heat exchanger and the second heat exchanger are arranged in a second direction perpendicular to a first direction, the first direction being a direction in which members forming the primary passages and members forming the secondary passages are stacked, the first heat exchanger extends further on a first side in the first direction than the second heat exchanger, the second heat exchanger extends further on a second side in the first direction than the first heat exchanger, the second side being opposite to the first side, a first exhaust air passage through which the exhaust air flow flowing out from the primary passages of the second heat exchanger passes, and a first supply air passage through which the supply air flow caused to flow into the secondary passages of the second heat exchanger passes are formed on the second side of the first heat exchanger, a second exhaust air passage through which the exhaust air flow caused to flow into the primary passages of the first heat exchanger passes, and a second supply air passage through which the supply air flow flowing out from the secondary passages of the first heat exchanger passes are formed on the first side of the second heat exchanger, a third supply air passage through which the supply air flow caused to flow into the secondary passages of the first heat exchanger passes, and a third exhaust air passage through which the exhaust air flow flowing from the first exhaust air passage passes are arranged in a third direction perpendicular to the first direction and the second direction, and a fourth exhaust air passage through which the exhaust air flow caused to flow into the primary passages of the second heat exchanger passes, and a fourth supply air passage through which the supply air flow flowing from the second supply air passage passes are arranged in the third direction.

### Advantageous Effects of Invention

The heat exchange ventilator according to the present invention produces an effect of reducing the pressure loss while accommodating the heat exchangers within a size required of the heat exchange ventilator.

### Brief Description of Drawings

FIG. 1 is a diagram illustrating a configuration of a heat exchange ventilator according to a first embodiment of the present invention.
FIG. 2 is a diagram illustrating first heat exchangers and second heat exchangers illustrated in FIG. 1.
FIG. 3 is a perspective view of a first heat exchanger illustrated in FIG. 2.
FIG. 4 is a diagram explaining the arrangement of air passages in a casing of the heat exchange ventilator illustrated in FIG. 1.
FIG. 5 is a cross-sectional view of the casing illustrated in FIG. 4 taken along line V-V.
FIG. 6 is a cross-sectional view of the casing illustrated in FIG. 4 taken along line VI-VI.
FIG. 7 is a cross-sectional view of the casing illustrated in FIG. 4 taken along line VII-VII.
FIG. 8 is a cross-sectional view of the casing illustrated in FIG. 4 taken along line VIII-VIII.
FIG. 9 is a first perspective view illustrating a configuration inside the casing illustrated in FIG. 4.
FIG. 10 is a second perspective view illustrating the configuration inside the casing illustrated in FIG. 4.
FIG. 11 is a diagram explaining movement of an exhaust air flow in the casing illustrated in FIG. 4.
FIG. 12 is a diagram explaining movement of a supply air flow in the casing illustrated in FIG. 4.

### Description of an embodiment

A heat exchange ventilator according to an embodiment of the present invention will be described in detail below with reference to the drawings. Note that the present invention is defined in claim 1 and not limited to the embodiment.

### First Embodiment.

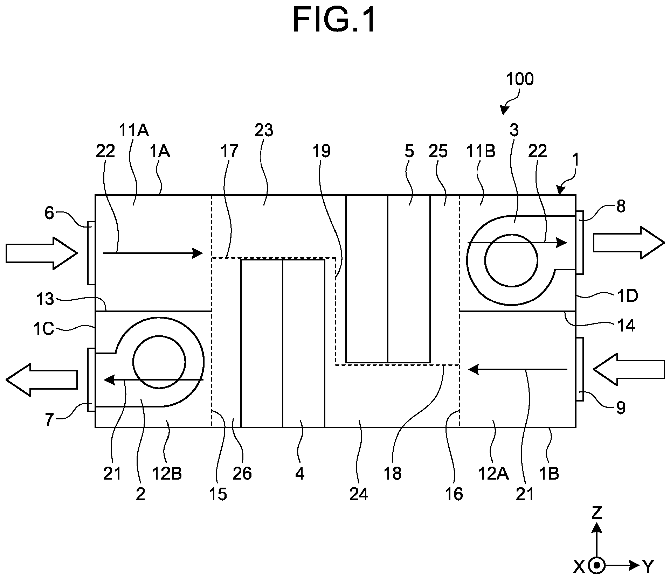

FIG. 1 is a diagram illustrating a configuration of a heat exchange ventilator according to a first embodiment of the present invention. A ventilator 100, which is a heat exchange ventilator, performs ventilation while carrying out heat exchange between an exhaust air flow 21 and a supply air flow 22. The exhaust air flow 21 is a flow of air exhausted from the inside to the outside of a room via the ventilator 100. The supply air flow 22 is a flow of air supplied from the outside to the inside of the room via the ventilator 100. The ventilator 100 ventilates the room by exhausting air from the inside to the outside of the room and supplying air from the outside to the inside of the room to maintain comfortable air environment in the room. In addition, the ventilator 100 reduces the difference in temperature and the difference in humidity between air taken into the room and air inside the room by heat exchange between the exhaust air flow 21 and the supply air flow 22, to reduce the load of room air conditioning.

In the first embodiment, the ventilator 100 is an air handling unit (AHU) capable of supplying and exhausting air in large volumes. The ventilator 100 is installed on the floor in the room. The ventilator 100 may be installed on the ceiling of a room, or may be installed outdoors such as on the roof of a building.

In the first embodiment, an X axis, a Y axis, and a Z axis are three axes perpendicular to each other. The Z axis is a vertical axis. A Z-axis direction, which is a first direction, is a direction parallel to the Z axis. A Y-axis direction, which is a second direction, is a direction parallel to the Y axis. An X-axis direction, which is a third direction, is a direction parallel to the X axis. In the drawings, the direction indicated by an arrow along the Z-axis direction will be referred to as a plus Z direction, and the direction opposite to the arrow will be referred to as a minus Z direction. The plus Z direction is a vertically upward direction. The minus Z direction is a vertically downward direction. The direction indicated by an arrow along the Y-axis direction will be referred to as a plus Y direction, and the direction opposite to the arrow will be referred to as a minus Y direction. The direction indicated by an arrow along the X-axis direction will be referred to as a plus X direction, and the direction opposite to the arrow will be referred to as a minus X direction.

The ventilator 100 includes an exhaust fan 2 for generating an exhaust air flow that flows from the inside to the outside of the room, and a supply fan 3 for generating a supply air flow that flows from the outside to the inside of the room. The exhaust fan 2 takes in air from the inside of the room, and sends the taken-in air to the outside. The supply fan 3 draws air from the outside of the room, and sends the drawn air to the inside.

The ventilator 100 includes first heat exchangers 4 and second heat exchangers 5 that carry out heat exchange between the exhaust air flow 21 and the supply air flow 22. The exhaust fan 2, the supply fan 3, the first heat exchangers 4, and the second heat exchangers 5 are accommodated in a casing 1. The casing 1 is a box having six faces, which are an upper face 1A and a lower face 1B, and four side faces 1C, 1D, 1E, and 1F. In FIG. 1, four of the six faces, which are the upper face 1A, the lower face 1B, and two side faces 1C and 1D are illustrated. The side face 1E is located deeper than the sheet surface of FIG. 1. The side face 1F is located nearer to the viewer than the sheet surface of FIG. 1. FIG. 1 schematically illustrates components provided inside the casing 1. In the casing 1, an air passage through which the exhaust air flow 21 passes, and an air passage through which the supply air flow 22 passes are formed.

A supply air inlet port 6 and an exhaust air outlet port 7 are provided on the side face 1C on the minus Y direction side of the casing 1. A supply air outlet port 8 and an exhaust air inlet port 9 are provided on the side face 1D on the plus Y direction side of the casing 1. The supply air flow 22 sucked into the supply air inlet port 6 flows inside the casing 1 in the plus Y direction, and is forced out through the supply air outlet port 8. The exhaust air flow 21 sucked into the exhaust air inlet port 9 flows inside the casing 1 in the minus Y direction, and is forced out through the exhaust air outlet port 7.

The ventilator 100 draws air from the outside of the room into a supply air passage 11A through the supply air inlet port 6. The air drawn into the supply air passage 11A passes through a supply air passage 11B, and is forced out into the room through the supply air outlet port 8. In addition, the ventilator 100 draws air from the inside of the room into an exhaust air passage 12A through the exhaust air inlet port 9. The air drawn into the exhaust air passage 12A passes through the exhaust air passage 12B, and is forced out of the room through the exhaust air outlet port 7.

The supply air passages 11A and 11B are provided on the upper face 1A side in the casing 1. The exhaust air passages 12A and 12B are provided on the lower face 1B side in the casing 1. A partition 13 separates the supply air passage 11A from the exhaust air passage 12B. A partition 14 separates the supply air passage 11B from the exhaust air passage 12A.

The first heat exchangers 4 and the second heat exchangers 5 are arranged along the Y-axis direction. The first heat exchangers 4 extend further on the minus Z direction side, which is a first side, than the second heat exchangers 5 in the Z-axis direction. The second heat exchangers 5 extend further on the plus Z direction side, which is a second side opposite to the first side, than the first heat exchangers 4 in the Z-axis direction. A part of the first heat exchangers 4 other than the part extending further on the minus Z direction side than the second heat exchangers 5 and a part of the second heat exchangers 5 other than the part extending further on the plus Z direction side than the first heat exchangers 4, are positioned within the same range of height in the Z-axis direction.

A partition 15 is provided on the plus Y direction side of the supply air passage 11A and the exhaust air passage 12B. The partition 15 separates a space including the supply air passage 11A and the exhaust air passage 12B from a space including the first heat exchangers 4 and the second heat exchangers 5. The partition 15 has an opening through which the exhaust air flow 21 passes, and an opening through which the supply air flow 22 passes.

A partition 16 is provided on the minus Y direction side of the supply air passage 11B and the exhaust air passage 12A. The partition 16 separates a space including the supply air passage 11B and the exhaust air passage 12A from the space including the first heat exchangers 4 and the second heat exchangers 5. The partition 16 has an opening through which the exhaust air flow 21 passes, and an opening through which the supply air flow 22 passes. The space inside the casing 1 is separated by the two partitions 15 and 16 into the space including the supply air passage 11A and the exhaust air passage 12B, the space including the first heat exchangers 4 and the second heat exchangers 5, and the space of the supply air passage 11B and the exhaust air passage 12A. These three spaces are arranged in a row in the Y-axis direction.

A partition 17, which is a first partition, is provided on the plus Z direction side of the first heat exchangers 4. An end of the partition 17 on the minus Y direction side is in contact with the partition 15. The first heat exchangers 4 are located in a space between the partition 17 and the lower face 1B. A partition 18, which is a second partition, is provided on the minus Z direction side of the second heat exchangers 5. An end of the partition 18 on the plus Y direction side is in contact with the partition 16. The second heat exchangers 5 are located in a space between the partition 18 and the upper face 1A.

A partition 19, which is a third partition, is provided between the first heat exchangers 4 and the second heat exchangers 5. The partition 19 separates a space in which the first heat exchangers 4 are provided from a space in which the second heat exchangers 5 are provided within the range of height between the partition 17 and the partition 18 in the Z-axis direction. An end of the partition 19 on the plus Z direction side is in contact with an end of the partition 17 on the plus Y direction side. An end of the partition 19 on the minus Z direction side is in contact with an end of the partition 18 on the minus Y direction side.

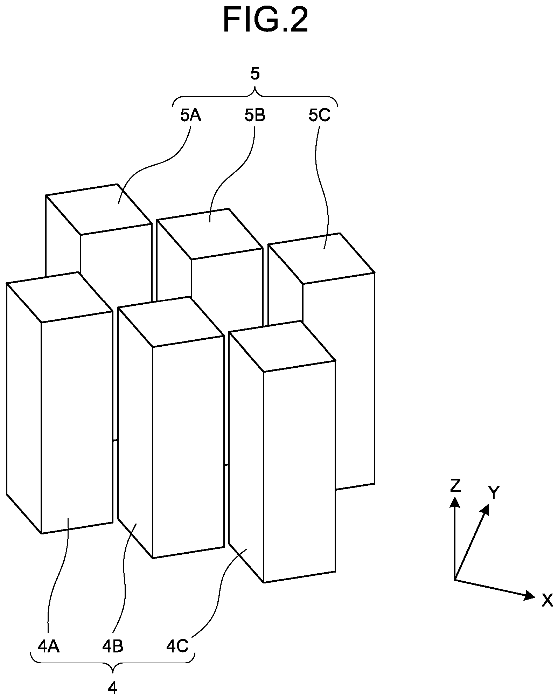

FIG. 2 is a diagram illustrating the first heat exchangers 4 and the second heat exchangers 5 illustrated in FIG. 1. The ventilator 100 includes three heat exchangers 4A, 4B, and 4C, which are the first heat exchangers 4, and three heat exchangers 5A, 5B, and 5C, which are the second heat exchangers. The heat exchanger 4A, 4B, 4C, 5A, 5B, and 5C have the same shape.

The heat exchangers 4A, 4B, and 4C are arranged in a row in the X-axis direction. The heat exchangers 5A, 5B, and 5C are arranged in a row in the X-axis direction. The row of heat exchangers 5A, 5B, and 5C are located on the plus Y direction side of the heat exchangers 4A, 4B, and 4C.

Because the six heat exchangers 4A, 4B, 4C, 5A, 5B, and 5C are divided into two rows that are arranged in the Y-axis direction in the ventilator 100, the ventilator 100 is reduced in size in the X-axis direction as compared with a case where the six heat exchangers 4A, 4B, 4C, 5A, 5B, and 5C are arranged in a row in the X-axis direction. Because the row of the second heat exchangers 5 is arranged on the plus Y direction side of the row of the first heat exchangers 4 in the ventilator 100, the ventilator 100 is reduced in size in the Z-axis direction as compared with a case where the row of the second heat exchangers 5 is arranged on the plus Z direction side of the row of the first heat exchangers 4.

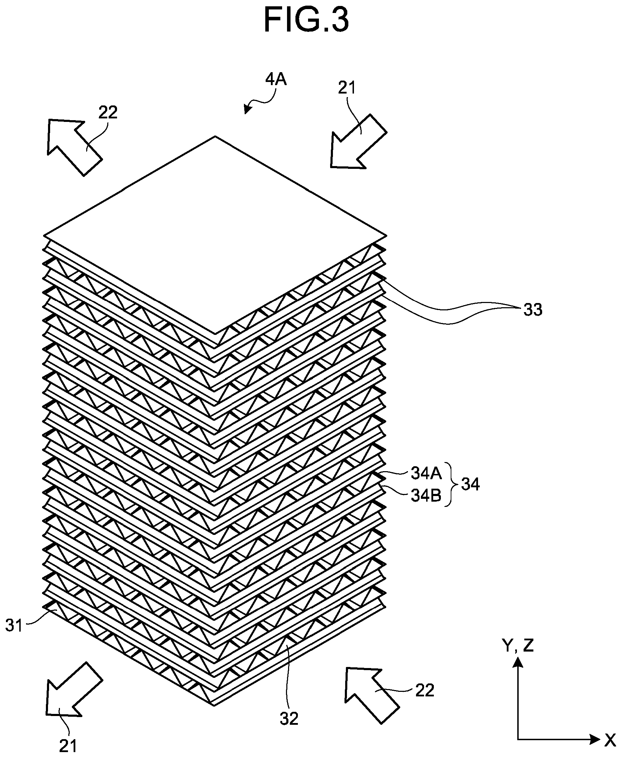

FIG. 3 is a perspective view of a first heat exchanger 4 illustrated in FIG. 2. FIG. 3 illustrates the heat exchanger 4A, which is one of the first heat exchangers 4. The heat exchanger 4A is a crossflow total heat exchange element in which the moving direction of the exhaust air flow 21 and the moving direction of the supply air flow 22 passing through the heat exchanger 4A are perpendicular to each other. Note that the Y-axis direction and the Z-axis direction are indicated by the same arrow in FIG. 3. The heat exchangers 4B, 4C, 5A, 5B, and 5C illustrated in FIG. 2 has configurations similar to that of the heat exchanger 4A.

The heat exchanger 4A includes a plurality of sheet materials 33 arranged with spaces therebetween, and spacer members 34 that keep the spaces between the sheet materials 33. The heat exchanger 4A is a stacked structure of the sheet materials 33 and the spacer members 34. The sheet materials 33 are plates machined to be flat. The spacer members 34 are corrugated sheet members. The sheet materials 33 and the spacer members 34 are bonded to each other.

The spacer members 34 include spacer members 34A and spacer members 34B that differ from each other in orientation so that the directions of folds of the spacer members 34A and the spacer members 34B are perpendicular to each other. Spaces formed between the spacer members 34B and the sheet materials 33 are primary passages 31 through which the exhaust air flow 21 passes. Spaces formed between the spacer members 34A and the sheet materials 33 are secondary passages 32 through which the supply air flow 22 passes. A plurality of primary passages 31 and a plurality of secondary passages 32 are formed in the heat exchanger 4A. The sheet materials 33, the spacer members 34B, which are members constituting the primary passages 31, and the spacer members 34A, which are members constituting the secondary passages 32, are stacked in the Z-axis direction. At the sheet materials 33, sensible heat exchange and latent heat exchange between the exhaust air flow 21 passing through the primary passages 31 and the supply air flow 22 passing through the secondary passages 32 are carried out without causing mixture of the exhaust air flow 21 and the supply air flow 22.

As the volumes of supply air and exhaust air in a heat exchange ventilator increase, the pressure loss may increase in heat exchangers owing to an increase in ventilation resistance. The pressure loss in a heat exchanger can be reduced by increasing the size of the heat exchanger in the stacking direction of layers through which air flows pass.

In the first embodiment, part of the first heat exchangers 4 and part of the second heat exchangers 5 are positioned within the same range of height in the Z-axis direction. This enables the first heat exchangers 4 and the second heat exchangers 5 to be more compactly accommodated in the ventilator 100 than a case where the first heat exchangers 4 and the second heat exchangers 5 are simply arranged in parallel in the Z-axis direction.

In addition, the ventilator 100 increases less in the size of the structure when the size of the first heat exchangers 4 in the Z-axis direction and the size of the second heat exchangers 5 in the Z-axis direction are increased as compared with the case where the first heat exchangers 4 and the second heat exchangers 5 are simply arranged in parallel in the Z-axis direction. The increase in the sizes in the Z-axis direction, which is the stacking direction of the layers through which air flows passes, reduces the ventilation resistance in the first heat exchangers 4 and the second heat exchangers 5. In the ventilator 100, the reduction in the ventilation resistance reduces the pressure loss in the first heat exchangers 4 and the second heat exchangers 5. Because the pressure loss increases as the volumes of supply air and exhaust air increase, the arrangement of the first heat exchangers 4 and the second heat exchangers 5 in the first embodiment is suitable for a ventilator 100 that supplies and exhaust air in large volumes. In the ventilator 100, the pressure loss can also be reduced by arranging the first heat exchangers 4 and the second heat exchangers 5, which correspond to a plurality of heat exchangers, in parallel as compared with a case where only one heat exchanger is provided. This enables the ventilator 100 to reduce the pressure loss while accommodating the first heat exchangers 4 and the second heat exchanger 5 within a limited size.

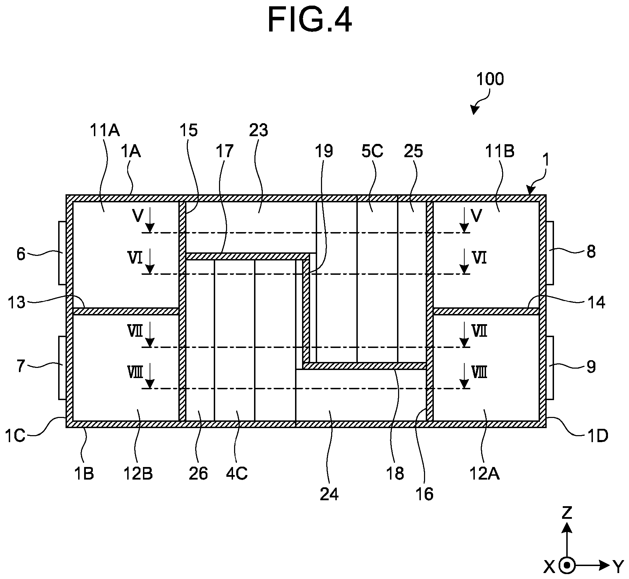

Next, arrangement of air passages in the ventilator 100 will be explained. FIG. 4 is a diagram explaining the arrangement of air passages in the casing 1 of the heat exchange ventilator illustrated in FIG. 1. FIG. 4 illustrates the inside of the casing 1 in a state in which the side face 1F is removed. The casing 1 and the partitions 13, 14, 15, 16, 17, 18, and 19 are hatched. In FIG. 4, the heat exchanger 4C, which is located at the outermost position on the plus X direction side among the heat exchangers 4A, 4B, and 4C, and the heat exchanger 5C, which is located at the outermost position on the plus X direction side among the heat exchangers 5A, 5B, and 5C, are illustrated. Note that, in FIG. 4, the exhaust fan 2 and the supply fan 3 are not illustrated.

A space between the partition 17 and the upper face 1A is divided into a plurality of air passages 23 arranged in parallel in the X-axis direction. In FIG. 4, one of the air passages 23, which is located at the outermost position on the plus X direction side, is illustrated. The air passages 23 are formed between the partition 15 and the heat exchangers 5A, 5B, and 5C.

A space between the partition 18 and the lower face 1B is divided into a plurality of air passages 24 arranged in parallel in the X-axis direction. In FIG. 4, one of the air passages 24, which is located at the outermost position on the plus X direction side, is illustrated. The air passages 24 are formed between the partition 16 and the heat exchangers 4A, 4B, and 4C.

The space between the partition 18 and the upper face 1A is divided into a plurality of air passages 25 arranged in parallel in the X-axis direction. In FIG. 4, one of the air passages 25, which is located at the outermost position on the plus X direction side, is illustrated. The air passages 25 are formed between the partition 16 and the heat exchangers 5A, 5B, and 5C.

The space between the partition 17 and the lower face 1B is divided into a plurality of air passages 26 arranged in parallel in the X-axis direction. In FIG. 4, one of the air passages 26, which is located at the outermost position on the plus X direction side, is illustrated. The air passages 26 are formed between the partition 15 and the heat exchangers 4A, 4B, and 4C.

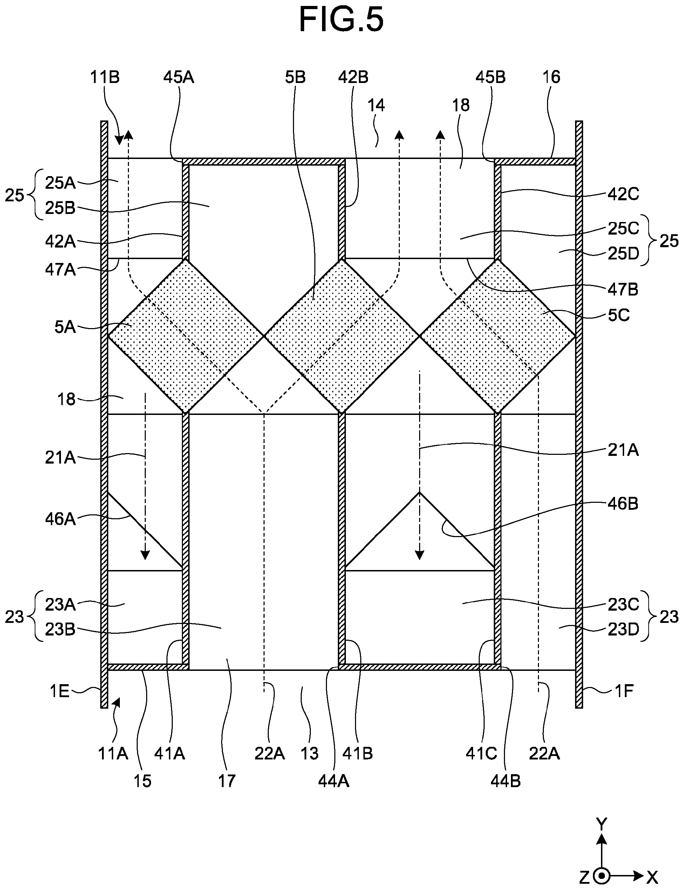

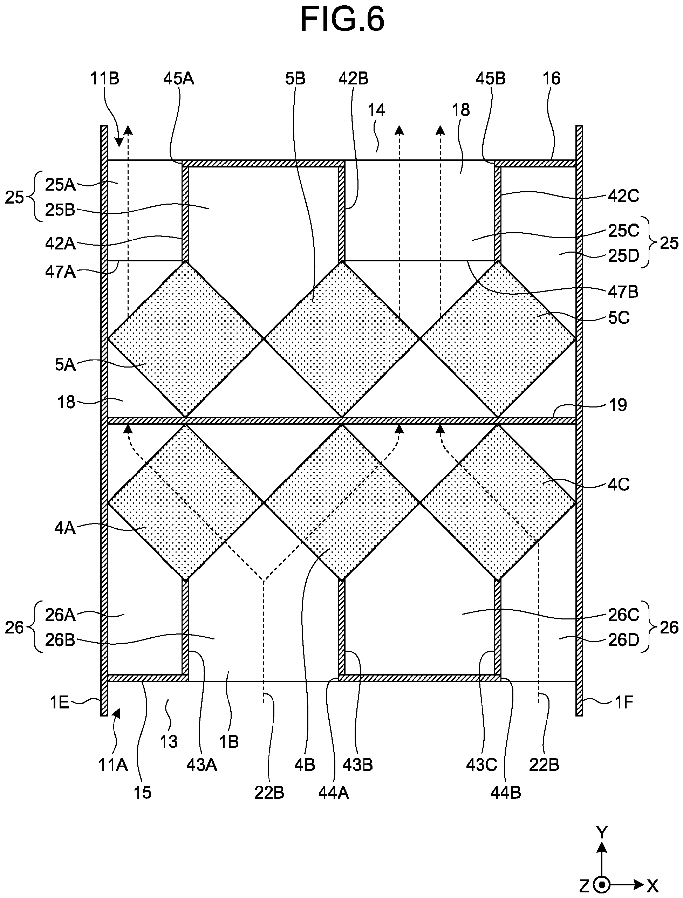

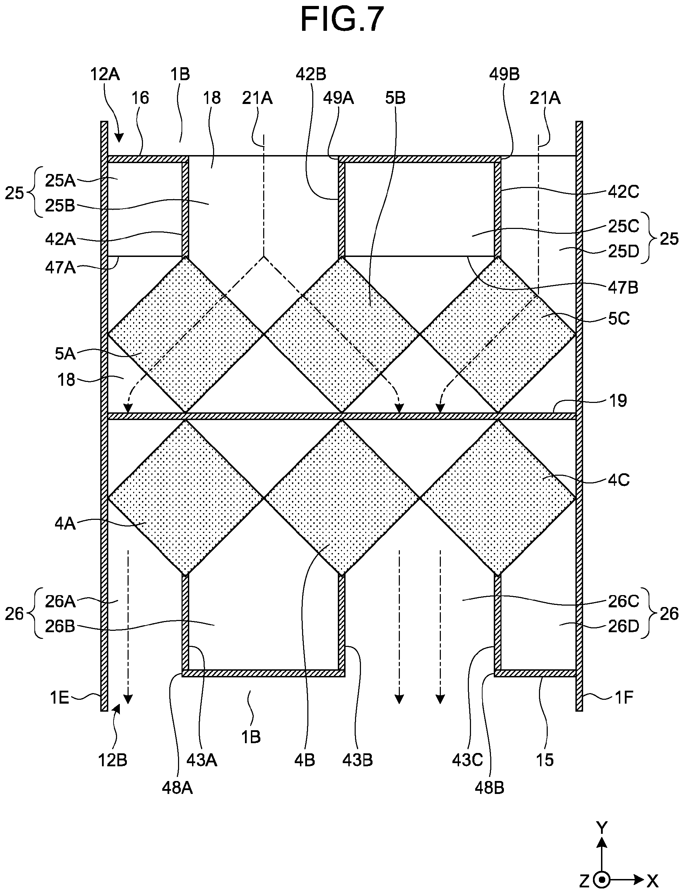

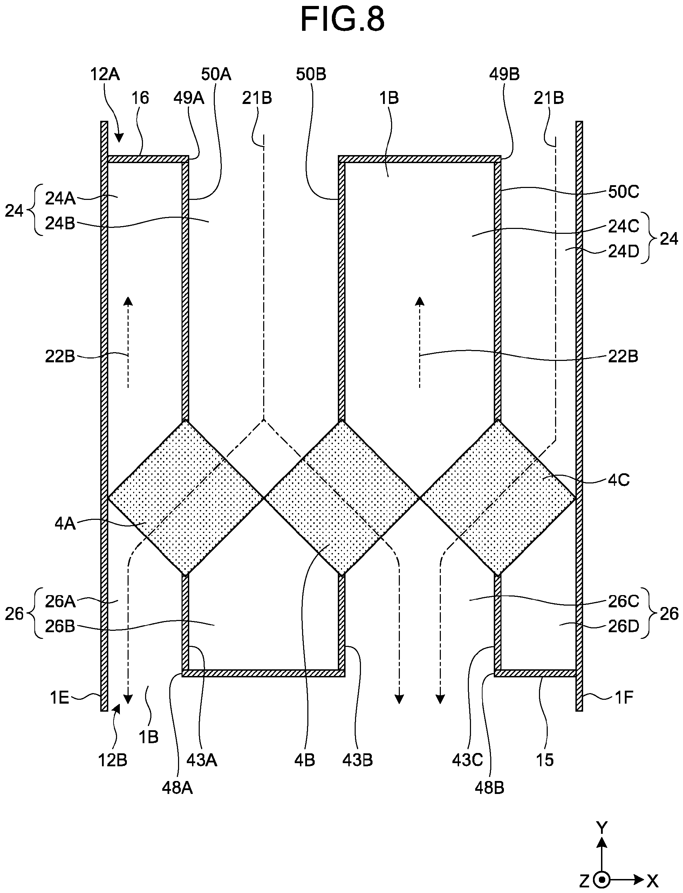

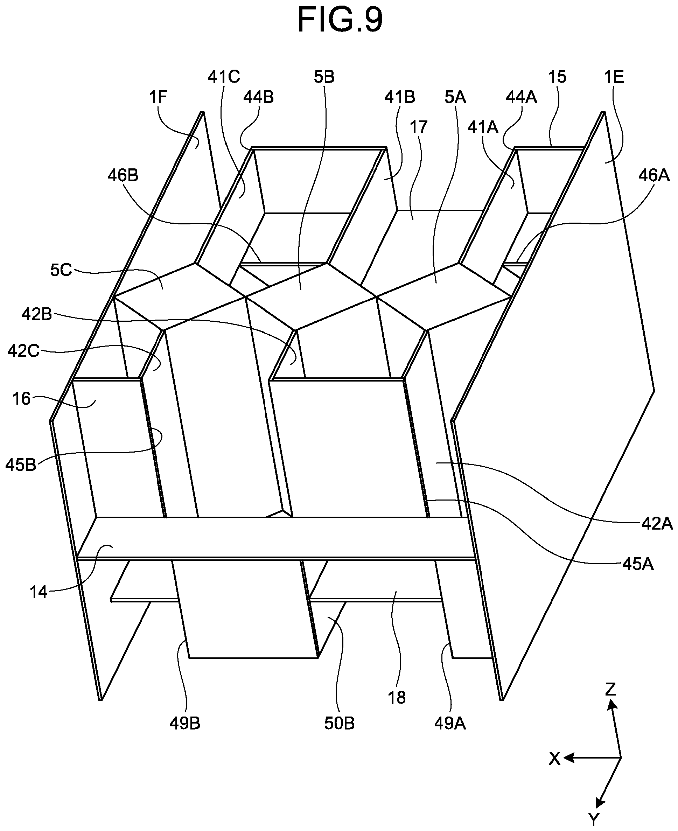

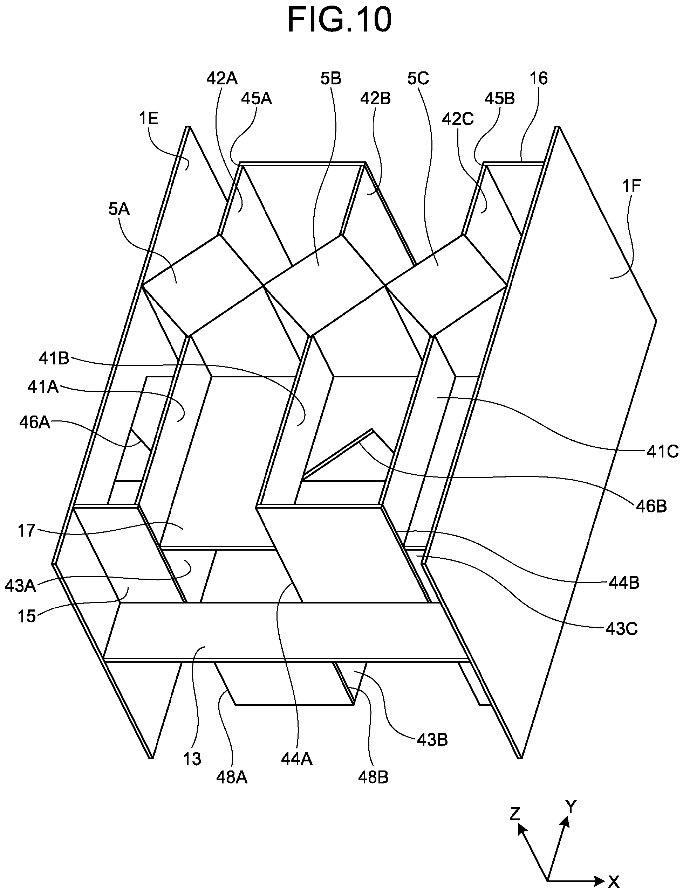

FIG. 5 is a cross-sectional view of the casing 1 illustrated in FIG. 4 taken along line V-V. FIG. 6 is a cross-sectional view of the casing 1 illustrated in FIG. 4 taken along line VI-VI. FIG. 7 is a cross-sectional view of the casing 1 illustrated in FIG. 4 taken along line VII-VII. FIG. 8 is a cross-sectional view of the casing 1 illustrated in FIG. 4 taken along line VIII-VIII. FIG. 9 is a first perspective view illustrating a configuration inside the casing 1 illustrated in FIG. 4. FIG. 10 is a second perspective view illustrating the configuration inside the casing 1 illustrated in FIG. 4. FIG. 9 illustrates the configuration inside the casing 1 as viewed at an angle from the plus Y direction side. FIG. 10 illustrates the configuration inside the casing 1 as viewed at an angle from the minus Y direction side.

The line V-V illustrated in FIG. 4 represents a cross section between the upper face 1A and the partition 17. The line VI-VI illustrated in FIG. 4 represents a cross section between the partition 17 and the partitions 13 and 14. The line VII-VII illustrated in FIG. 4 represents a cross section between the partitions 13 and 14 and the partition 18. The line VIII-VIII illustrated in FIG. 4 represents a cross section between the partition 18 and the lower face 1B. Note that, in FIGS. 5 to 8, part of the casing 1 illustrated in FIG. 4 on the minus Y direction side with respect to the partition 15 and part thereof on the plus Y direction side with respect to the partition 16 are not illustrated. In FIGS. 5 to 8, the heat exchangers 4A, 4B, 4C, 5A, 5B, and 5C are dotted.

As illustrated in FIG. 5, four air passages 23A, 23B, 23C, and 23D, which are the air passages 23, are formed between the side face 1E and the side face 1F. A partition 41A separates two air passages 23A and 23B from each other. A partition 41B separates two air passages 23B and 23C from each other. A partition 41C separates two air passages 23C and 23D from each other. Ends of the partitions 41A, 41B, and 41C on the minus Y direction side are in contact with the partition 15. An end of the partition 41A on the plus Y direction side is in contact with a ridgeline of the heat exchanger 5A directed to the minus Y direction. An end of the partition 41B on the plus Y direction side is in contact with a ridgeline of the heat exchanger 5B directed to the minus Y direction. An end of the partition 41C on the plus Y direction side is in contact with a ridgeline of the heat exchanger 5C directed to the minus Y direction. Ends of the partitions 41A, 41B, and 41C on the plus Z direction side are in contact with the upper face 1A. Ends of the partitions 41A, 41B, and 41C on the minus Z direction side are in contact with the partition 17.

As illustrated in FIGS. 5, 6, and 7, four air passages 25A, 25B, 25C, and 25D, which are the air passages 25, are formed between the side face 1E and the side face 1F. A partition 42A separates two air passages 25A and 25B from each other. A partition 42B separates two air passages 25B and 25C from each other. A partition 42C separates two air passages 25C and 25D from each other. Ends of the partitions 42A, 42B, and 42C on the plus Y direction side are in contact with the partition 16. An end of the partition 42A on the minus Y direction side is in contact with a ridgeline of the heat exchanger 5A directed to the plus Y direction. An end of the partition 42B on the minus Y direction side is in contact with a ridgeline of the heat exchanger 5B directed to the plus Y direction. An end of the partition 42C on the minus Y direction side is in contact with a ridgeline of the heat exchanger 5C directed to the plus Y direction. Ends of the partitions 42A, 42B, and 42C on the plus Z direction side are in contact with the upper face 1A. Ends of the partitions 42A, 42B, and 42C on the minus Z direction side are in contact with the partition 18.

As illustrated in FIGS. 6, 7, and 8, four air passages 26A, 26B, 26C, and 26D, which are the air passages 26, are formed between the side face 1E and the side face 1F. A partition 43A separates two air passages 26A and 26B from each other. A partition 43B separates two air passages 26B and 26C from each other. A partition 43C separates two air passages 26C and 26D from each other. Ends of the partitions 43A, 43B, and 43C on the minus Y direction side are in contact with the partition 15. An end of the partition 43A on the plus Y direction side is in contact with a ridgeline of the heat exchanger 4A directed to the minus Y direction. An end of the partition 43B on the plus Y direction side is in contact with a ridgeline of the heat exchanger 4B directed to the minus Y direction. An end of the partition 43C on the plus Y direction side is in contact with a ridgeline of the heat exchanger 4C directed to the minus Y direction. Ends of the partitions 43A, 43B, and 43C on the plus Z direction side are in contact with the partition 17. Ends of the partitions 43A, 43B, and 43C on the minus Z direction side are in contact with the lower face 1B. The partitions 43A, 43B, and 43C stand on the lower face 1B in such a manner as to be capable of supporting the partition 17.

As illustrated in FIG. 8, four air passages 24A, 24B, 24C, and 24D, which are the air passages 24, are formed between the side face 1E and the side face 1F. A partition 50A separates two air passages 24A and 24B from each other. A partition 50B separates two air passages 24B and 24C from each other. A partition 50C separates two air passages 24C and 24D from each other. Ends of the partitions 50A, 50B, and 50C on the plus Y direction side are in contact with the partition 16. An end of the partition 50A on the minus Y direction side is in contact with a ridgeline of the heat exchanger 4A directed to the plus Y direction. An end of the partition 50B on the minus Y direction side is in contact with a ridgeline of the heat exchanger 4B directed to the plus Y direction. An end of the partition 50C on the minus Y direction side is in contact with a ridgeline of the heat exchanger 4C directed to the plus Y direction. Ends of the partitions 50A, 50B, and 50C on the plus Z direction side are in contact with the partition 18. Ends of the partitions 50A, 50B, and 50C on the minus Z direction side are in contact with the lower face 1B. The partitions 50A, 50B, and 50C stand on the lower face 1B in such a manner as to be capable of supporting the partition 18.

As illustrated in FIGS. 5, 6, and 10, two openings 44A and 44B are formed in the partition 15 on the plus Z direction side with respect to the partition 13. The opening 44A is formed between two partitions 41A and 41B on the plus Z direction side with respect to the partition 17 as illustrated in FIGS. 5 and 10. The opening 44A is formed between two partitions 43A and 43B on the minus Z direction side with respect to the partition 17 as illustrated in FIGS. 6 and 10. The opening 44B is formed between the partition 41C and the side face 1F on the plus Z direction side with respect to the partition 17 as illustrated in FIGS. 5 and 10. The opening 44B is formed between the partition 43C and the side face 1F on the minus Z direction side with respect to the partition 17 as illustrated in FIGS. 6 and 10.

As illustrated in FIG. 5, the air passage 23B is connected with the supply air passage 11A through the opening 44A. The air passage 23D is connected with the supply air passage 11A through the opening 44B. Ends of two air passages 23A and 23C on the minus Y direction side are blocked by the partition 15.

As illustrated in FIG. 6, on the plus Z direction side with respect to the partition 13, the air passage 26B is connected with the supply air passage 11A through the opening 44A. On the plus Z direction side with respect to the partition 13, the air passage 26D is connected with the supply air passage 11A through the opening 44B. On the plus Z direction side with respect to the partition 13, ends of two air passages 26A and 26C on the minus Y direction side are blocked by the partition 15.

As illustrated in FIGS. 7, 8, and 10, two openings 48A and 48B are formed in the partition 15 on the minus Z direction side with respect to the partition 13. The opening 48A is formed between the side face 1E and the partition 43A. The opening 48B is formed between two partitions 43B and 43C.

As illustrated in FIGS. 7 and 8, on the minus Z direction side with respect to the partition 13, the air passage 26A is connected with the exhaust air passage 12B through the opening 48A. On the minus Z direction side with respect to the partition 13, the air passage 26C is connected with the exhaust air passage 12B through the opening 48B. On the minus Z direction side with respect to the partition 13, ends of two air passages 26B and 26D on the minus Y direction side are blocked by the partition 15.

As illustrated in FIGS. 5, 6, and 9, two openings 45A and 45B are formed in the partition 16 on the plus Z direction side with respect to the partition 14. The opening 45A is formed between the side face 1E and the partition 42A. The opening 45B is formed between two partitions 42B and 42C.

As illustrated in FIGS. 5 and 6, on the plus Z direction side with respect to the partition 14, the air passage 25A is connected with the supply air passage 11B through the opening 45A. On the plus Z direction side with respect to the partition 14, the air passage 25C is connected with the supply air passage 11B through the opening 45B. On the plus Z direction side with respect to the partition 14, ends of two air passages 25B and 25D on the plus Y direction side are blocked by the partition 16.

As illustrated in FIGS. 7, 8, and 9, two openings 49A and 49B are formed in the partition 16 on the minus Z direction side with respect to the partition 14. The opening 49A is formed between two partitions 42A and 42B on the plus Z direction side with respect to the partition 18 as illustrated in FIGS. 7 and 9. The opening 49A is formed between two partitions 50A and 50B on the minus Z direction side with respect to the partition 18 as illustrated in FIGS. 8 and 9. The opening 49B is formed between the partition 42C and the side face 1F on the plus Z direction side with respect to the partition 18 as illustrated in FIGS. 7 and 9. The opening 49B is formed between the partition 50C and the side face 1F on the minus Z direction side with respect to the partition 18 as illustrated in FIGS. 8 and 9.

As illustrated in FIG. 7, on the minus Z direction side with respect to the partition 14, the air passage 25B is connected with the exhaust air passage 12A through the opening 49A. On the minus Z direction side with respect to the partition 14, the air passage 25D is connected with the exhaust air passage 12A through the opening 49B. On the minus Z direction side with respect to the partition 14, ends of two air passages 25A and 25C on the plus Y direction side are blocked by the partition 16.

As illustrated in FIG. 8, the air passage 24B is connected with the exhaust air passage 12A through the opening 49A. The air passage 24D is connected with the exhaust air passage 12A through the opening 49B. Ends of two air passages 24A and 24C on the plus Y direction side are blocked by the partition 16.

As illustrated in FIGS. 5 and 10, two openings 46A and 46B are formed in the partition 17. The opening 46A is formed in a part of the partition 17 that separates the air passage 23A illustrated in FIG. 5 from the air passage 26A illustrated in FIG. 6. The opening 46A is formed between a face of the heat exchanger 4A that exists between a ridgeline directed to the minus Y direction and a ridgeline directed to the minus X direction, and the side face 1E. The air passage 23A and the air passage 26A are connected with each other through the opening 46A.

The opening 46B is formed in a part of the partition 17 that separates the air passage 23C illustrated in FIG. 5 from the air passage 26C illustrated in FIG. 6. The opening 46B is formed between a face of the heat exchanger 4B that exists between a ridgeline directed to the minus Y direction and a ridgeline directed to the plus X direction, and a face of the heat exchanger 4C that exists between a ridgeline directed to the minus Y direction and a ridgeline directed to the minus X direction. The air passage 23C and the air passage 26C are connected with each other through the opening 46B.

As illustrated in FIGS. 5, 6, and 7, two openings 47A and 47B are formed in the partition 18. The opening 47A is formed in a part of the partition 18 that separates the air passage 25A illustrated in FIGS. 5, 6, and 7 from the air passage 24A illustrated in FIG. 8. The opening 47A is formed between a face of the heat exchanger 5A that exists between a ridgeline directed to the plus Y direction and a ridgeline directed to the minus X direction, and the side face 1E. The air passage 25A and the air passage 24A are connected with each other through the opening 47A.

The opening 47B is formed in a part of the partition 18 that separates the air passage 25C illustrated in FIGS. 5, 6, and 7 from the air passage 24C illustrated in FIG. 8. The opening 47B is formed between a face of the heat exchanger 5B that exists between a ridgeline directed to the plus Y direction and a ridgeline directed to the plus X direction, and a face of the heat exchanger 5C that exists between a ridgeline directed to the plus Y direction and a ridgeline directed to the minus X direction. The air passage 25C and the air passage 24C are connected with each other through the opening 47B.

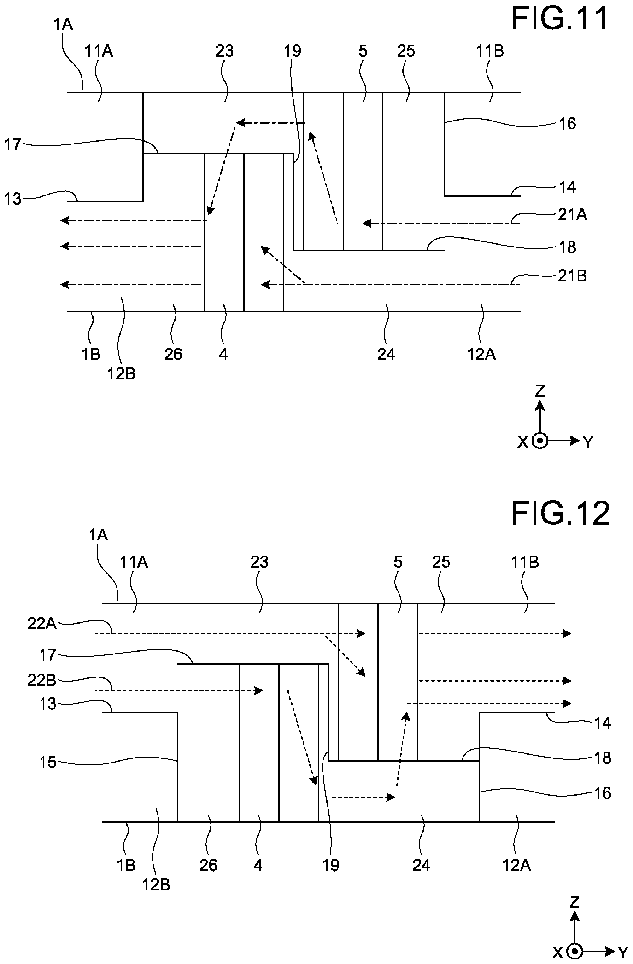

Next, the movements of the exhaust air flow 21 and the supply air flow 22 in the ventilator 100 will be explained with reference to FIGS. 5 to 8, 11, and 12. FIG. 11 is a diagram explaining the movement of the exhaust air flow 21 in the casing 1 illustrated in FIG. 4. FIG. 12 is a diagram explaining the movement of the supply air flow 22 in the casing 1 illustrated in FIG. 4. In FIG. 11, the movement of the exhaust air flow 21 in the Y-axis direction and the Z-axis direction is expressed by alternate long and short dash line arrows. In FIG. 12, the movement of the supply air flow 22 in the Y-axis direction and the Z-axis direction is expressed by broken line arrows. Note that, in FIGS. 5 to 8, the movement of the exhaust air flow 21 in the X-axis direction and the Y-axis direction is expressed by alternate long and short dash line arrows. In FIGS. 5 to 8, the movement of the supply air flow 22 in the X-axis direction and the Y-axis direction is expressed by broken line arrows.

Of the supply air flow 22 that has moved from the supply air inlet port 6 to the supply air passage 11A illustrated in FIG. 4, a supply air flow 22A that has passed through the opening 44A on the plus Z direction side with respect to the partition 17 moves through the air passage 23B and flows into either one of two heat exchangers 5A and 5B. In addition, the supply air flow 22A that has passed through the opening 44B on the plus Z direction side with respect to the partition 17 moves through the air passage 23D and flows into the heat exchanger 5C. The supply air flow 22A that has passed through the secondary passages 32 of the heat exchanger 5A moves through the air passage 25A, and moves into the supply air passage 11B via the opening 45A. The supply air flow 22A that has passed through the secondary passages 32 of the heat exchanger 5B and the supply air flow 22A that has passed through the secondary passages 32 of the heat exchanger 5C move through the air passage 25C, and move into the supply air passage 11B via the opening 45B. Two air passages 23B and 23D are first supply air passages through which the supply air flow 22A caused to flow into the secondary passages 32 of the second heat exchangers 5 passes. The air passages 23B and 23D, which are the first supply air passages, are formed on the plus Z direction side of the first heat exchangers 4.

Of the supply air flow 22 that has moved from the supply air inlet port 6 to the supply air passage 11A illustrated in FIG. 4, a supply air flow 22B that has passed through the opening 44A on the minus Z direction side with respect to the partition 17 moves through the air passage 26B and flows into either one of two heat exchangers 4A and 4B. In addition, the supply air flow 22B that has passed through the opening 44B on the minus Z direction side with respect to the partition 17 moves through the air passage 26D and flows into the heat exchanger 4C. Two air passages 26B and 26D are third supply air passages through which the supply air flow 22B caused to flow into the secondary passages 32 of the first heat exchangers 4 passes.

The supply air flow 22B that has passed through the secondary passages 32 of the heat exchanger 4A hits the partition 19, thus moves in the minus Z direction, and flows into the air passage 24A illustrated in FIG. 8. The supply air flow 22B that has traveled through the air passage 24A flows into the air passage 25A via the opening 47A as illustrated in FIG. 6. The supply air flow 22B that has moved through the air passage 25A moves into the supply air passage 11B via the opening 45A. The supply air flow 22B that has passed through the secondary passages 32 of the heat exchanger 4B and the supply air flow 22B that has passed through the secondary passages 32 of the heat exchanger 4C hit the partition 19, and flow into the air passage 24C illustrated in FIG. 8. The supply air flow 22B that has moved through the air passage 24C flows into the air passage 25C via the opening 47B as illustrated in FIG. 6. The supply air flow 22B that has moved through the air passage 25C moves into the supply air passage 11B via the opening 45B. Two air passages 24A and 24C are second supply air passages through which the supply air flow 22B flowing out of the secondary passages 32 of the first heat exchangers 4 passes. The air passages 24A and 24C, which are the second supply air passages, are formed on the minus Z direction side of the second heat exchangers 5. Two air passages 25A and 25C are fourth supply air passages through which the supply air flow 22B flowing from the air passages 24A and 24C, which are the second supply air passages, passes.

Of the exhaust air flow 21 that has moved from the exhaust air inlet port 9 to the exhaust air passage 12A illustrated in FIG. 4, an exhaust air flow 21A that has passed through the opening 49A on the plus Z direction side with respect to the partition 18 moves through the air passage 25B and flows into either one of two heat exchangers 5A and 5B. In addition, the exhaust air flow 21A that has passed through the opening 49B on the plus Z direction side with respect to the partition 18 moves through the air passage 25D and flows into the heat exchanger 5C. Two air passages 25B and 25D are fourth exhaust air passages through which the exhaust air flow 21A caused to flow into the primary passages 31 of the second heat exchangers 5 passes. The air passages 25B and 25D, which are the fourth exhaust air passages, and the air passages 25A and 25C, which are the fourth supply air passages, are arranged in the X-axis direction.

The exhaust air flow 21A that has moved through the primary passages 31 of the heat exchanger 5A hits the partition 19, thus moves in the plus Z direction, and flows into the air passage 23A illustrated in FIG. 5. The exhaust air flow 21A that has moved through the air passage 23A flows into the air passage 26A via the opening 46A as illustrated in FIG. 7. The exhaust air flow 21A that has moved through the air passage 26A moves into the exhaust air passage 12B via the opening 48A. The exhaust air flow 21A that has passed through the primary passages 31 of the heat exchanger 5B and the exhaust air flow 21A that has passed through the primary passages 31 of the heat exchanger 5C hit the partition 19 and flow into the air passage 23C illustrated in FIG. 5. The exhaust air flow 21A that has moved through the air passage 23C flows into the air passage 26C via the opening 46B as illustrated in FIG. 7. The exhaust air flow 21A that has moved through the air passage 26C moves into the exhaust air passage 12B via the opening 48B. Two air passages 23A and 23C are first exhaust air passages through which the exhaust air flow 21A flowing out of the primary passages 31 of the second heat exchangers 5 passes. The air passages 23A and 23C, which are the first exhaust air passages, are formed on the plus Z direction side of the first heat exchangers 4. Two air passages 26A and 26C are third exhaust air passages through which the exhaust air flow 21A flowing from the air passages 23A and 23C, which are the first exhaust air passages, passes. The air passages 26A and 26C, which are the third exhaust air passages, and the air passages 26B and 26D, which are the third supply air passages, are arranged in the X-axis direction.

Of the exhaust air flow 21 that has moved from the exhaust air inlet port 9 to the exhaust air passage 12A illustrated in FIG. 4, an exhaust air flow 21B that has passed through the opening 49A on the minus Z direction side with respect to the partition 18 moves through the air passage 24B and flows into either one of two heat exchangers 4A and 4B. In addition, the exhaust air flow 21B that has passed through the opening 49B on the minus Z direction side with respect to the partition 18 moves through the air passage 24D and flows into the heat exchanger 4C. The exhaust air flow 21B that has passed through the primary passages 31 of the heat exchanger 4A moves through the air passage 26A, and moves into the exhaust air passage 12B via the opening 48A. The exhaust air flow 21B that has passed through the primary passages 31 of the heat exchanger 4B and the exhaust air flow 21B that has passed through the primary passages 31 of the heat exchanger 4C move through the air passage 26C, and moves into the exhaust air passage 12B via the opening 48B. Two air passages 24B and 24D are second exhaust air passages through which the exhaust air flow 21B caused to flow into the primary passages 31 of the first heat exchangers 4 passes. The air passages 24B and 24D, which are the second exhaust air passages, are formed on the minus Z direction side of the second heat exchangers 5.

The heat exchangers 4A, 4B, and 4C exchange heat with the supply air flow 22B illustrated in FIG. 6 and the exhaust air flow 21B illustrated in FIG. 8. The heat exchangers 5A, 5B, and 5C exchange heat with the supply air flow 22A illustrated in FIG. 5 and the exhaust air flow 21A illustrated in FIG. 7.

The partition 17, which is the first partition, is provided between the air passages 23A, 23C, 23B, and 23D, which correspond to the first exhaust air passages and the first supply air passages, and the air passages 26A, 26C, 26B, and 26D, which correspond to the third exhaust air passages and the third supply air passages. The partition 18, which is the second partition, is provided between the air passages 24B, 24D, 24A, and 24C, which correspond to the second exhaust air passages and the second supply air passages, and the air passages 25B, 25D, 25A, and 25C, which correspond to the fourth exhaust air passages and the fourth supply air passages. In the ventilator 100, provision of the partitions 17 and 18 enables the air passages for the exhaust air flow 21 and the air passages for the supply air flow 22 to be separated from each other.

The partition 19, which is the third partition, is provided between the first heat exchangers 4 and the second heat exchangers 5 within the range between the partition 17 and the partition 18 in the Z-axis direction. In the ventilator 100, provision of the partition 19 enables the supply air flow 22 having passed through the secondary passages 32 of the first heat exchangers 4 to be guided to the air passages 24A and 24C, which are the second supply air passages, and the exhaust air flow 21 having passed through the primary passages 31 of the second heat exchangers 5 to be guided to the air passages 23A and 23C, which are the first exhaust air passages.

In the ventilator 100, because the third supply air passages and the third exhaust air passages are arranged in the Z-axis direction, the third supply air passages and the third exhaust air passages can be separated from the first supply air passages and the first exhaust air passages by one partition 17, which achieves a simple structure. In the ventilator 100, because the fourth supply air passages and the fourth exhaust air passages are arranged in the Z-axis direction, the fourth supply air passages and the fourth exhaust air passages can be separated from the second supply air passages and the second exhaust air passages by one partition 18, which achieves a simple structure.

In the ventilator 100, provision of the partitions 41A, 41B, and 41C enables separation of the air passages 23A and 23C, which are the first exhaust air passages, from the air passages 23B and 23D, which are the first supply air passages. In the ventilator 100, provision of the partitions 50A, 50B, and 50C enables separation of the air passages 24B and 24D, which are the second exhaust air passages, from the air passages 24A and 24C, which are the second supply air passages.

In the ventilator 100, provision of the partitions 43A, 43B, and 43C enables separation of the air passages 26A and 26C, which are the third exhaust air passages, from the air passages 26B and 26D, which are the third supply air passages. In the ventilator 100, provision of the partitions 42A, 42B, and 42C enables separation of the air passages 25B and 25D, which are the fourth exhaust air passages, from the air passages 25A and 25C, which are the fourth supply air passages.

Note that, in the ventilator 100, the partitions 43A, 43B, and 43C may be omitted, and the ridgelines directed to the minus Y direction of the heat exchangers 4A, 4B, and 4C may be in contact with the partition 15. In this case as well, in the ventilator 100, the air passages 26A and 26C, which are the third exhaust air passages, and the air passages 26B and 26D, which are the third supply air passages, can be separated from each other. In addition, in the ventilator 100, the partitions 42A, 42B, and 42C may be omitted, and the ridgelines directed to the plus Y direction of the heat exchangers 5A, 5B, and 5C may be in contact with the partition 16. In this case as well, in the ventilator 100, the air passages 25B and 25D, which are the fourth exhaust air passages, and the air passages 25A and 25C, which are the fourth supply air passages, can be separated from each other.

In the ventilator 100, the first heat exchangers 4 extend further on the minus Z direction side than the second heat exchangers 5, which enables the air passages 23B and 23D for guiding the supply air flow 22A to the second heat exchangers 5 to be provided on the plus Z direction side of the first heat exchangers 4. In the ventilator 100, the air passages 23A and 23C for guiding the exhaust air flow 21A flowing out from the second heat exchangers 5 to the exhaust air passage 12B can be provided on the plus Z direction side of the first heat exchangers 4. In addition, in the ventilator 100, the second heat exchangers 5 extend further on the plus Z direction side than the first heat exchangers 4, which enables the air passages 24B and 24D for guiding the exhaust air flow 21B to the first heat exchangers 4 to be provided on the minus Z direction side of the second heat exchangers 5. In the ventilator 100, the air passages 24A and 24C for guiding the supply air flow 22B flowing out from the first heat exchangers 4 to the supply air passage 11B can be provided on the minus Z direction side of the second heat exchangers 5. This enables the ventilator 100 to achieve heat exchange in the configuration in which the first heat exchangers 4 and the second heat exchangers 5 are arranged in the Y-axis direction in a manner similar to that in the configuration in which the first heat exchangers 4 and the second heat exchangers 5 are arranged in the Z-axis direction.

Note that the number of the first heat exchangers 4 arranged in the X-axis direction and the number of second heat exchangers 5 arranged in the X-axis direction are not limited to three, and may be one or two, or may be larger than three. The number of first heat exchangers 4 and the number of second heat exchangers 5 are appropriately determined on the basis of the size of the ventilator 100 or the performance required of the ventilator 100.

The first side on which the first heat exchangers 4 extend further than the second heat exchangers 5 may be the plus Z direction side instead of the minus Z direction side. The second side on which the second heat exchangers 5 extend further than the first heat exchangers 4 may be the minus Z direction side instead of the plus Z direction side. The first heat exchangers 4 and the second heat exchangers 5 only need to extend further than each other on the sides opposite to each other in the Z-axis direction.

The air passages in the ventilator 100 are not limited to those arranged so that the supply air flow 22 sucked into an upper space in the casing 1 is forced out from the upper space in the casing 1 and that the exhaust air flow 21 sucked into a lower space in the casing 1 is forced out from the lower space in the casing 1. The arrangement of the air passages may be changed so that the supply air flow 22 sucked into a lower space in the casing 1 is forced out from the lower space in the casing 1 and that the exhaust air flow 21 sucked into an upper space in the casing 1 is forced out from the upper space in the casing 1.

The arrangement of the air passages may be changed so that the supply air flow 22 sucked into an upper space in the casing 1 is forced out from a lower space in the casing 1 and that the exhaust air flow 21 sucked into the upper space in the casing 1 is forced out from the lower space in the casing 1. The arrangement of the air passages may be changed so that the supply air flow 22 sucked into a lower space in the casing 1 is forced out from an upper space in the casing 1 and that the exhaust air flow 21 sucked into the lower space in the casing 1 is forced out from the upper space in the casing 1.

According to the first embodiment, in the ventilator 100, the first heat exchangers 4 and the second heat exchangers 5 are arranged in the Y-axis direction. In addition, in the ventilator 100, the first heat exchangers 4 extend further on the first side than the second heat exchangers 5, and the second heat exchangers 5 extend further on the second side than the first heat exchangers 4. As a result, the ventilator 100 produces effect of reducing the pressure loss while accommodating the heat exchangers within a size required of the heat exchange ventilator.

### Reference Signs List

1 casing; 1A upper face; 1B lower face; 1C, 1D, 1E, 1F side face; 2 exhaust fan; 3 supply fan; 4 first heat exchanger; 4A, 4B, 4C, 5A, 5B, 5C heat exchanger; 5 second heat exchanger; 6 supply air inlet port; 7 exhaust air outlet port; 8 supply air outlet port; 9 exhaust air inlet port; 11A, 11B supply air passage; 12A, 12B exhaust air passage; 13, 14, 15, 16, 17, 18, 19, 41A, 41B, 41C, 42A, 42B, 42C, 43A, 43B, 43C, 50A, 50B, 50C partition; 21, 21A, 21B exhaust air flow; 22, 22A, 22B supply air flow; 23, 23A, 23B, 23C, 23D, 24, 24A, 24B, 24C, 24D, 25, 25A, 25B, 25C, 25D, 26, 26A, 26B, 26C, 26D air passage; 31 primary passage; 32 secondary passage; 33 sheet material; 34, 34A, 34B spacer member; 44A, 44B, 45A, 45B, 46A, 46B, 47A, 47B, 48A, 48B, 49A, 49B opening; 100 ventilator.

## Claims

1. A heat exchange ventilator (100) comprising:
an exhaust fan (2) to generate an exhaust air flow flowing from an inside to an outside of a room;
a supply fan (3) to generate a supply air flow flowing from the outside to the inside of the room; and
a first heat exchanger (4) and a second heat exchanger (5) to carry out heat exchange between the exhaust air flow and the supply air flow, the first heat exchanger (4) and the second heat exchanger (5) each including primary passages (31) through which the exhaust air flow passes and secondary passages (32) through which the supply air flow passes, wherein
the first heat exchanger (4) and the second heat exchanger (5) are arranged in a second direction perpendicular to a first direction, the first direction being a direction in which members forming the primary passages (31) and members forming the secondary passages (32) are stacked,
the first heat exchanger (4) extends further on a first side in the first direction than the second heat exchanger (5),
the second heat exchanger (5) extends further on a second side in the first direction than the first heat exchanger (4), the second side being opposite to the first side,
a first exhaust air passage (23A, 23C) through which the exhaust air flow flowing out from the primary passages (31) of the second heat exchanger (5) passes, and a first supply air passage (23B, 23D) through which the supply air flow caused to flow into the secondary passages (32) of the second heat exchanger (5) passes are formed on the second side of the first heat exchanger (4),
a second exhaust air passage (24B, 24D) through which the exhaust air flow caused to flow into the primary passages (31) of the first heat exchanger (4) passes, and a second supply air passage (24A, 24C) through which the supply air flow flowing out from the secondary passages (32) of the first heat exchanger (4) passes are formed on the first side of the second heat exchanger (5),
a third supply air passage (26B, 26D) through which the supply air flow caused to flow into the secondary passages (32) of the first heat exchanger (4) passes, and a third exhaust air passage (26A, 26C) through which the exhaust air flow flowing from the first exhaust air passage (23A, 23C) passes are arranged in a third direction perpendicular to the first direction and the second direction, and
a fourth exhaust air passage (25B, 25D) through which the exhaust air flow caused to flow into the primary passages (31) of the second heat exchanger (5) passes, and a fourth supply air passage (25A, 25C) through which the supply air flow flowing from the second supply air passage (24A, 24C) passes are arranged in the third direction.

2. The heat exchange ventilator according to claim 1, further comprising:
a first partition (17) provided between an arrangement of the first exhaust air passage (23A, 23C) the first supply air passage (23B, 23D) and an arrangement of the third exhaust air passage (26A, 26C) and the third supply air passage (26B, 26D); and
a second partition (18) provided between an arrangement of the second exhaust air passage (24B, 24D) and the second supply air passage (24A, 24C) and an arrangement of the fourth exhaust air passage and the fourth supply air passage.

3. The heat exchange ventilator according to claim 2, further comprising: a third partition provided between the first heat exchanger (4) and the second heat exchanger (5) within a range between the first partition (17) and the second partition (18) in the first direction.

4. The heat exchange ventilator according to any one of claims 1 to 3, comprising:
a plurality of the first heat exchangers (4) arranged in a third direction perpendicular to the first direction and the second direction; and
a plurality of the second heat exchangers (5) arranged in the third direction.

5. The heat exchange ventilator according to any one of claims 1 to 4, wherein
the first side is an upper side in a vertical direction, the vertical direction being the first direction, and
the second side is a lower side in the vertical direction.

## Patentansprüche

1. Wärmetauscherventilator (100), mit:
einem Auslassgebläse (2), um einen Auslassluftstrom zu erzeugen, der von einer Innenseite zu einer Außenseite eines Raums strömt;
einem Zufuhrgebläse (3), um einen Zufuhrluftstrom zu erzeugen, der von der Außenseite zu der Innenseite des Raums strömt; und
einem ersten Wärmetauscher (4) und einem zweiten Wärmetauscher (5) zum Ausführen eines Wärmetauschens zwischen dem Auslassluftstrom und dem Zufuhrluftstrom, wobei der erste Wärmetauscher (4) und der zweite Wärmetauscher (5) jeweils einen Primärdurchgang (31) aufweisen, durch den der Auslassluftstrom durchtritt, und einen Sekundärdurchgang (32) aufweisen, durch den der Zufuhrluftstrom durchtritt, wobei
der erste Wärmetauscher (4) und der zweite Wärmetauscher (5) in einer zweiten Richtung senkrecht zu einer ersten Richtung angeordnet sind, wobei die erste Richtung eine Richtung ist, in der Elemente, die den Primärdurchgang (31) bilden, und Elemente, die den Sekundärdurchgang (32) bilden, aufeinandergestapelt sind,
der erste Wärmetauscher (4) sich weiter auf einer ersten Seite in der ersten Richtung als der zweite Wärmetauscher erstreckt,
der zweite Wärmetauscher (5) sich weiter auf einer zweiten Seite der ersten Richtung als der erste Wärmetauscher (4) erstreckt, wobei die zweite Seite entgegengesetzt zu der ersten Seite ist,
ein erster Auslassluftdurchgang (23A, 23C), durch den der Auslassluftstrom, der aus den Primärdurchgängen (31) des zweiten Wärmetauschers (5) ausströmt, durchtritt, und ein erster Zufuhrluftdurchgang (23B, 23D), durch den der Zufuhrluftstrom, der bewirkt wird, in die Sekundärdurchgänge (32) des zweiten Wärmetauschers (5) zu strömen, durchtritt, auf der zweiten Seite des ersten Wärmetauschers (4) ausgebildet sind,
ein zweiter Auslassluftdurchgang (24B, 24D), durch den der Auslassluftstrom, der bewirkt ist in die Primärdurchgänge (31) des ersten Wärmetauschers (4) zu strömen, durchtritt, und ein zweiter Zufuhrluftdurchgang (24A, 24C), durch den der Zufuhrluftstrom, der aus den Sekundärdurchgängen (32) des ersten Wärmetauschers (4) ausströmt, durchtritt, auf der ersten Seite des zweiten Wärmetauschers (5) ausgebildet sind,
ein dritter Zufuhrluftdurchgang (26B, 26D), durch den der Zufuhrluftstrom, der bewirkt ist in die Sekundärdurchgänge (32) des ersten Wärmetauschers (4) zu strömen, durchtritt, und ein dritter Auslassluftstrom (26A, 26C), durch den der Auslassluftstrom, der von dem ersten Auslassluftdurchgang (23A, 23C) strömt, durchtritt, in einer dritten Richtung senkrecht zu der ersten Richtung und der zweiten Richtung angeordnet sind, und
ein vierter Auslassluftdurchgang (25B, 25D), durch den der Auslassluftstrom, der bewirkt ist in dem Primärdurchgang (31) des zweiten Wärmetauschers (5) zu strömen, durchtritt, und ein vierter Zufuhrluftdurchgang (25A, 25C), durch den der Zufuhrluftstrom, der von dem zweiten Zufuhrluftdurchgang (24A, 24C) strömt, durchtritt, in der dritten Richtung angeordnet sind.

2. Wärmetauscherventilator nach Anspruch 1, des Weiteren mit:
einer ersten Teilung (17), die zwischen einer Anordnung des ersten Auslassluftdurchgangs (23A, 23C) des ersten Zufuhrluftdurchgangs (23B, 23D) und einer Anordnung des dritten Auslassluftdurchgangs (26A, 26C) und des dritten Zufuhrluftdurchgangs (26B, 26D) bereitgestellt ist; und
einer zweiten Teilung (18) zwischen einer Anordnung des zweiten Auslassluftdurchgangs (24B, 24D) und des zweiten Zufuhrluftdurchgangs (26A, 26C) und einer Anordnung des vierten Austauschluftdurchgangs und des vierten Zufuhrluftdurchgangs angeordnet ist.

3. Wärmetauscherventilator nach Anspruch 2, des Weiteren mit: einer dritten Teilung, die zwischen dem ersten Wärmetauscher (4) und dem zweiten Wärmetauscher (5) innerhalb eines Bereichs zwischen der ersten Teilung (17) und der zweiten Teilung (18) in der ersten Richtung bereitgestellt ist.

4. Wärmetauscherventilator nach einem der Ansprüche 1 bis 3, mit:
einer Mehrzahl der ersten Wärmetauscher (4), die in einer dritten Richtung senkrecht zu der ersten Richtung und der zweiten Richtung angeordnet sind; und
einer Mehrzahl der zweiten Wärmetauscher (5), die in einer dritten Richtung angeordnet sind.

5. Wärmetauscherventilator nach einem der Ansprüche 1 bis 4, wobei
die erste Seite eine obere Seite in einer Vertikalrichtung ist, wobei die Vertikalrichtung die erste Richtung ist, und
die zweite Seite eine Unterseite der Vertikalrichtung ist.

## Revendications

1. Ventilateur d'échange de chaleur (100), comprenant :
un ventilateur d'extraction (2) pour générer un écoulement d'air d'extraction s'écoulant depuis un intérieur vers un extérieur d'une pièce ;
un ventilateur d'alimentation (3) pour générer un écoulement d'air d'alimentation s'écoulant depuis l'extérieur vers l'intérieur de la pièce ; et
un premier échangeur de chaleur (4) et un second échangeur de chaleur (5) pour réaliser un échange de chaleur entre l'écoulement d'air d'extraction et l'écoulement d'air d'alimentation, le premier échangeur de chaleur (4) et le second échangeur de chaleur (5) incluant chacun des passages primaires (31) à travers lesquels l'écoulement d'air d'extraction passe et des passages secondaires (32) à travers lesquels l'écoulement d'air d'alimentation passe, dans lequel
le premier échangeur de chaleur (4) et le second échangeur de chaleur (5) sont agencés dans une deuxième direction perpendiculaire à une première direction, la première direction étant une direction dans laquelle des éléments formant les passages primaires (31) et des éléments formant les passages secondaires (32) sont empilés,
le premier échangeur de chaleur (4) s'étend davantage sur un premier côté dans la première direction que le second échangeur de chaleur (5),
le second échangeur de chaleur (5) s'étend davantage sur un second côté dans la première direction que le premier échangeur de chaleur (4), le second côté étant opposé au premier côté,
un premier passage d'air d'extraction (23A, 23C) à travers lequel l'écoulement d'air d'extraction s'écoulant hors des passages primaires (31) du second échangeur de chaleur (5) passe, et un premier passage d'air d'alimentation (23B, 23D) à travers lequel l'écoulement d'air d'alimentation forcé de s'écouler dans les passages secondaires (32) du second échangeur de chaleur (5) passe sont formés sur le second côté du premier échangeur de chaleur (4),
un deuxième passage d'air d'extraction (24B, 24D) à travers lequel l'écoulement d'air d'extraction forcé de s'écouler dans les passages primaires (31) du premier échangeur de chaleur (4) passe, et un deuxième passage d'air d'alimentation (24A, 24C) à travers lequel l'écoulement d'air d'alimentation s'écoulant hors des passages secondaires (32) du premier échangeur de chaleur (4) passe sont formés sur le premier côté du second échangeur de chaleur (5),
un troisième passage d'air d'alimentation (26B, 26D) à travers lequel l'écoulement d'air d'alimentation forcé de s'écouler dans les passages secondaires (32) du premier échangeur de chaleur (4) passe, et un troisième passage d'air d'extraction (26A, 26C) à travers lequel l'écoulement d'air d'extraction s'écoulant à partir du premier passage d'air d'extraction (23A, 23C) passe sont agencés dans une troisième direction perpendiculaire à la première direction et la deuxième direction, et
un quatrième passage d'air d'extraction (25B, 25D) à travers lequel l'écoulement d'air d'extraction forcé de s'écouler dans les passages primaires (31) du second échangeur de chaleur (5) passe, et un quatrième passage d'air d'alimentation (25A, 25C) à travers lequel l'écoulement d'air d'alimentation s'écoulant à partir du deuxième passage d'air d'alimentation (24A, 24C) passe sont agencés dans la troisième direction.

2. Ventilateur d'échange de chaleur selon la revendication 1, comprenant en outre :
une première cloison (17) prévue entre un agencement du premier passage d'air d'extraction (23A, 23C) le premier passage d'air d'alimentation (23B, 23D) et un agencement du troisième passage d'air d'extraction (26A, 26C) et du troisième passage d'air d'alimentation (26B, 26D) ; et
une deuxième cloison (18) prévue entre un agencement du deuxième passage d'air d'extraction (24B, 24D) et du deuxième passage d'air d'alimentation (24A, 24C) et un agencement du quatrième passage d'air d'extraction et du quatrième passage d'air d'alimentation.

3. Ventilateur d'échange de chaleur selon la revendication 2, comprenant en outre :
une troisième cloison prévue entre le premier échangeur de chaleur (4) et le second échangeur de chaleur (5) au sein d'une distance entre la première cloison (17) et la deuxième cloison (18) dans la première direction.

4. Ventilateur d'échange de chaleur selon l'une quelconque des revendications 1 à 3, comprenant :
une pluralité des premiers échangeurs de chaleur (4) agencés dans une troisième direction perpendiculaire à la première direction et la deuxième direction ; et
une pluralité des seconds échangeurs de chaleur (5) agencés dans la troisième direction.

5. Ventilateur d'échange de chaleur selon l'une quelconque des revendications 1 à 4, dans lequel
le premier côté est un côté supérieur dans une direction verticale, la direction verticale étant la première direction, et
le second côté est un côté inférieur dans la direction verticale.
